# NEW EUROPEAN PATENT SPECIFICATION

(11) **EP 1 764 663 B2**
(45) Date of publication and mention of the opposition decision: **07.08.2013**
(45) Mention of the grant of the patent: 18.11.2009
(21) Application number: 05425655.7
(22) Date of filing: 19.09.2005
(51) Int. Cl.: G05B 19/042, E05F 15/10

(54) **Driving device for actuating a barrier such as doors, windows or the like, and associated method therefor**
Antriebsvorrichtung zur Ansteuerung von Barrieren wie Türen, Fenster oder dergleichen, und entsprechendes Verfahren dazu
Dispositif de commande pour actionner une barrière telle qu'une porte, une fenêtre ou similaire, et méthode associée

(43) Date of publication of application: 21.03.2007
(73) Proprietor: Nekos Srl, 36064 Mason Vicentino VI (IT)
(72) Inventor: Gandini, Francesco, 35012 Camposampiero (Padova) (IT)
(74) Representative: Modiano, Micaela Nadia

(56) References cited:
- EP-A- 0 718 730
- EP-A- 0 913 748
- EP-A- 0 964 974
- DE-A1- 3 935 173
- DE-A1- 4 041 087
- DE-U1- 29 623 428
- US-A- 5 285 137

## Description

The present invention relates to an actuator, in particular able to co-operate with other actuators, for operating a closing system.

Although the actuator according to the invention may be used for doors, windows or the like, below reference will be made for the sake of simplicity only to the example of a window.

Since increasingly large-size windows are being made, in particular for the construction of continuous facades where fairly heavy structures are mounted, apparatuses for automating opening and closing of the windows are required, in order to avoid manual operations and control the natural air-conditioning system.

Two types of actuator exist for these applications: a chain actuator or linear actuator. In the case of the latter large and aesthetically unattractive actuators are used when, in fact, they should be aesthetically pleasing and functionally efficient. Therefore, normally the first type, which are much smaller, less voluminous and aesthetically acceptable, are preferred.

In the case of very large windows, a single actuator is unable to provide the power required and therefore two (or more) actuators must be fitted to the same window and must be synchronized with each other.

Solutions for synchronizing two or more chain actuators are already known.

One solution uses the pulses generated by a microswitch inside the actuator and connected to the driving member. Two cables convey the pulse signal to an external control unit which controls up to three actuators. The control unit processes the number of pulses received from each actuator when one of these actuators sends a larger number of pulses than the other ones, the control unit causes stoppage thereof until the other actuators are synchronized.

Another solution uses an external control unit in order to control the amount of power used by the actuators connected. If the power used by one actuator is greater than a given predefined value, the control unit stops the actuators and paralyses the system. Rather than proper synchronization, this is just a simple way of controlling operation of the machines. Another example of a system with an external control system is described in US 4,933,613.

These systems are very costly and complicated owing to the need for a further peripheral device, the control unit, which must also be wired to all the actuators.

A two drive system usable on a road vehicle for operation of a component such as a sliding roof is disclosed in the utility model DE 296 23 428 U. The unit has motors and transmissions coupled to actuators. Each drive has a microprocessor module and these have interfaces coupled together by a data line, thereby exchanging data between them for a coordinated movement of the actuators.

A system which eliminates the external control unit is described in the patent EP 0,964,974 where a mutual communication line is used for communication of the actuators connected to it. The actuators are independent units which, once they are operating, send along the line their serial number in coded binary form by way of identification data for the other units. For this purpose, the permanent memory of each actuator stores the serial numbers of the actuators with which it co-operates, which numbers must be stored during installation. This procedure, which requires a programming operation for each individual actuator during installation, is necessary in order to identify all the co-operating actuators and prevent the use of any number of actuators randomly chosen (by a user) and requires the use of appropriate programming means. The drawback lies in the fact that the user must also be aware of the particular transmission protocol, in order to define valid serial numbers.

Each actuator sends along the line synchronization data, for management of which a coding system is required in order to define a priority for control of the line (this problem arises when a single resource such as a data bus must be shared by several transceivers). It is obvious that as several actuators are connected to the line the system for managing the associated priority conditions becomes more complex.

The system also activates the actuators only when each of them has received and recognized all the serial numbers of the other co-operating actuators, such that the problem arises that, in very "noisy" environments, complete initialization can never be achieved because of error signals. Once the actuators start to move the window, each of them sends along the line its own synchronization data and receives that of the other actuators. If an actuator finds that its synchronization data indicates a speed greater than that of another actuator, it slows down. Therefore, if the slower actuator is the last to have priority on the line, its information may be processed with a sufficiently long time delay to cause asynchronism between the actuators.

The main object of the present invention is to provide a method and an associated device for implementing it, for operating closing systems of the type indicated, which does not have some of the disadvantages of the known systems.

Another object of the invention is to obtain a device for operating closing systems of the type mentioned, which is simple to manufacture and reliable.

These objects are obtained with a method for operating a closing system such as doors, windows or the like with synchronized movement actuators, comprising the steps of:
- providing a plurality of actuators each having motor means for moving the closing system;
- connecting the actuators to the closing system;
- linking the actuators by means of a data communication channel to which they have access via a send and receive interface of their own and on which they exchange synchronization, identification and initialization data;
- provide each actuator with processing means for individually managing the communication data on the channel and driving the motor means;
characterized in that it comprises the further step of:
programming the operating condition of the actuator so as to cause it to assume either an operative configuration in which the actuator is the controller and controls at least one of the other actuators via the data channel and/or an operative configuration in which the actuator is controlled by another controller actuator via the data channel.

This method is realized with an actuator according to the invention, comprising:
- motor means for moving the closing system;
- a send and receive interface for connection to an external data communication channel via which data may be exchanged with one or more actuators;
- processing means for managing data communication on the channel and driving of the motor means;
characterized in that it comprises means for programming the operating condition of the actuator, able to cause it to assume either an operative configuration in which the actuator controls at least one other actuator connected to the data channel or an operative configuration in which the actuator is controlled by another controller actuator connected to the channel.

Advantageously each actuator may be produced structurally in an identical manner, i.e. using the same components. If necessary, the actuator is configured using suitable programming means for operating either individually, or as a controller actuator (Master, actuator controlling the Slaves) or as an actuator controlled by the Master (Slave). The configuration is performed in a simple manner for the user for example by means of a selection device comprising switches, dip-switches or jumpers or by means of a remote programming command which the programming means detect by mean of suitable wireless (e.g. radio or infrared) remote transceiver means. The selection interface may also have optionally a display for displaying the status of the actuator. The status of the actuator set with the selection device is read by the processing means, which advantageously may be a microprocessor, each time the actuator received a movement command from a user. The operating functions of the actuator, which are coded by the program inside the microprocessor, are therefore modified in real time, by means of a simple selection performed on the selection device or interface.

The setting of the operative configuration of the actuators, i.e. determining who becomes controller (Master) and all the others controlled actuators (Slaves), establishes an operating hierarchy among the plurality of actuators which simultaneously operate on the closing system. The communication between Master and Slaves follows a protocol and predetermined timing sequence, except in the case of anomalous system conditions.

This results in an intrinsic order in management of communication between Master and Slaves, the impossibility of the system degenerating into a sudden unstable condition and the possibility of the Master intervening promptly in order to correct the action of one or more Slaves, without having to wait for completion of a priority queue.

In fact, in a system of the type according to the invention, the situation where a unit functions in an uncontrolled manner is fully prevented. For example it is sufficient to have a transmission protocol so that the Master interrogates the Slave concerned until the latter responds correctly.

Clearly the main advantage of the invention is being able to have actuators which are structurally identical but can be readily configured so as to obtain a control hierarchy. It is possible both to manufacture actuators in a simple, low-cost and standardized manner (also in the event of replacement which does not require the knowledge of serial codes) and to ensure a high level of immunity of the system with regard to malfunctions and stalemate conditions. Each Slave actuator operates autonomously when controlling the motor means for the closing system, but does so following an instruction from the Master who in turn receives a response (feedback) from the Salve as to correct execution of the operation. Continuous monitoring by the Master prevents any loss of synchronism by a Slave.

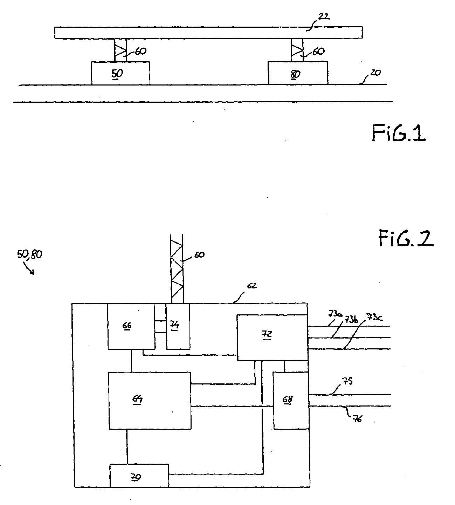

The advantages of the invention will emerge more clearly from the following description of an example of embodiment, illustrated in the accompanying drawing where:
Fig. 1 shows a schematic view of a synchronized operating system for a window;
Fig. 2 shows a block diagram which shows the main components of an actuator according to the invention;
Fig. 3 shows a connection between three actuators according to the invention;
Fig. 4 shows a time diagram for the data in transit on a data line.
In the operating system shown in Fig. 1, two identical actuators 50, 80 are fixed to the frame 20 of a window, the leaf of which is indicated by 22. The latter is connected in a known manner to two chains 60 which travel inside and outside the casing 62, respectively, of the actuators 50, 80 (cf. Fig. 2). The linear movement of the chain 60 is responsible for the thrusting force which opens the leaf 22 as well as the pulling force which closes it, pulling it towards the frame 20.

Inside the casing 62, the actuators 50, 80 comprise processing means 64 connected in a known manner to a motor 66, a communication interface 68 and a configuration selection interface 70. All these components are powered by a power supply circuit 72 which draws power from three external power supply cables 73a, b, c (normally connected to the electrical supply network). The three connections 73a, b, c have the function of powering/controlling the actuator. One of the three connections acts as a common connection and the connection of one of the other two to the latter generates an opening or closing command.

The same principle is also applicable to a version of the invention with a low-voltage power supply, for example 24V c.c., where only two wires (not shown) are used. In this case it is sufficient to reverse their polarity in order to reverse the movement of the motor.

The motor 66 is connected to a drive 74 which engages with the chain 60. Owing to the rotation of the motor 66, the chain 60, which is normally wound inside the casing 62, is unwound and pushed outside of the latter, or pulled back inside, being wound up again. An encoder (not shown), for detecting directly or indirectly the travel of the chain 60, is for example associated with the motor 66 for resolving the angular position thereof, said data of travel being processed by the means 64.

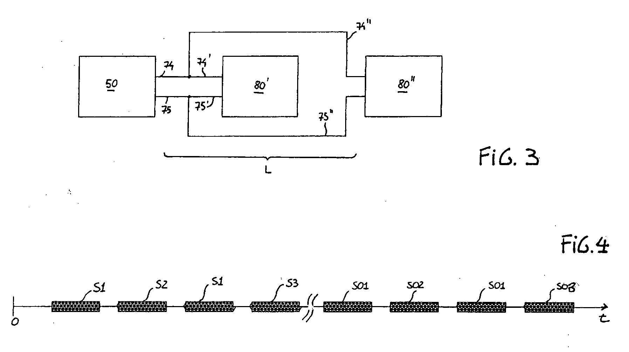

The communication interface 68 is connected to the exterior via two wires 75, 76 which must joined to the corresponding wires of one or more other identical actuators for forming a communication line L between all the actuators connected. A star-type network with two centres is thus formed (see Fig. 3). Three identically designed actuators are indicated by 50, 80' and 80" and the respective wires are indicated by 75, 76; 75', 76' and 75" and 76" and form in groups of three the arms of the two stars. The different prime symbols associated with the same reference number indicate that the design of the actuator is identical, but distinguish between different actuator elements.

The configuration selection interface 70 supplies the processing means 64 with the information which describes the function of the actuator within the line L. By means of the selection device 70, a user is able - either manually or by means of remote programming (for example via radio if the selection device 70 has remote communication means) - inform the means 64 of the operations which the actuator must perform within the line L. In the case where the means 64 are for example in the form of a microprocessor, the latter will read the data supplied by the selection device 70 and will consequently adapt the flow and/or the instructions of the program which it is executing in order to perform the particular functions of the actuator in Master mode or in Slave mode (or for individual operation in case the actuator works as an isolated actuator). It must be noted that in this way what changes from one actuator to another is only the way in which the program contained inside the microprocessor is processed; the rest remains identical, thus greatly facilitating mass production and adaptation to numerous operating conditions (only the program need be changed). It should be noted that the programming operation which adjusts operations of the actuator may be performed by the user during installation.

In order to explain operation of the system of actuators provided according to the invention, we shall assume that the actuator 50 is the actuator (Master) which controls the other two actuators 80' and 80" (Slaves) via the communication line L. Reference should be made to Fig. 4.

Upon the movement command given by the user, each actuator performs a check to determine whether the actuator must operate as a Master or as a Slave (or neither of the two, in the case where it operates on its own). In particular, the processing means 64 interrogate the interface 70 and obtain from it configuration data with which they adapt operation of the actuator.

If the actuator must operate as a Master, it checks by means of the interface 68 whether the wires 75, 76 are connected to at least one other actuator, which must be a Slave. In the case where a Master detects a second Master along the line, the first Master detects an anomalous situation and stops any activity of the system, while waiting for corrective action on the part of the operator.

If, however, the Master detects a Slave, it starts a procedure to detect the good condition of the data line L, initiating communication of the protocol which terminates with activation of the actuators in the case of a positive outcome: during this step the Master adapts the state of the internal registers of the Slaves to its own state, ensuring consistent interpretation of the future commands and a determined behaviour of the system. If an actuator was set as a Slave, it awaits to receive a data string from a Master via the line L. When the Master initiates the transmission, the Slave replies, resulting in the start of the operating step with communication in controlled actuator mode.

When the recognition step has ended, the Master sends to the first Slave an initialization and identification data string S1 (cf. Fig. 4) which contains end-of-travel data, speed data of the chain 60 and alignment data, such as the programmed end-of-travel value, the last blocking code, direction of the movement, etc. The Slave receives the alignment string S1 containing the initialization data, extracts it and overwrites on its own data which is therefore ignored. It should be noted that the data string S1, like all the subsequent strings, may have a digital or analog format, using the known analog modulation techniques.

The Slave then replies with a response string S2 indicating its own identification and initialization data. The Master receives the string S2 and checks whether the Slave has performed alignment of the registers. If this is not the case, the Master repeats the procedure.

The Master then sends another identical string S1 to the second Slave which responds with a string S3 and so on for the other Slaves, if there are any.

The identification and initialization data strings S1, S2 and S3 contain in an identical manner and in the same position the same type of data. Some data is decoded and used by the master, other data is used by the Slave.

The fact that the Slaves also send their own data on the line L, which is then ignored, is the result of the fact that the actuators are identical and therefore certain of their functions are identical. A variant could be used to suppress this step, but its redundancy is useful for ensuring optimum adaptation to the transmission line L for optimizing data transmission.

Once this step has ended, all the actuators on the line L have received operating data from the Master and are ready to operate in synchronism. This step is also useful for defining the good state of the transmission channel represented by the line L and for assessing the correct operation of all the actuators connected to it.

If the Master or a Slave do not function correctly, during this step the error is detected and the system does not start.

With each user command to move the closing device, the Master sends to the Slaves a start command (contained in a data string) and therefore both the Master actuator and the Slave actuators activate their motor 66 and the chain 60 appropriately.

Control of the synchronism between the actuators is performed as follows. Each Slave sends to the Master a synchronism data string containing in coded form the information relating to the number of revolutions performed by its motor 66 and its reference speed and other information relating to the operating state.

Each actuator, by means of its processing unit 64, processes the information relating to the motor speed, the absorbed current and power supply voltage. The motor speed may be calculated - as already mentioned - by means of a position encoder or by means of measurement of the voltage on the motor.

The Master sends the same data to each Slave. As before, the same information is transmitted and received by each actuator whether it be Master or Slave. Although a different transmission protocol is possible, this solution facilitates the design of actuators which as far as possible have the same functional features, increasing the ease of manufacture thereof and reducing the complexity. Advantageously the data string exchanged between Master and Slave also has the same data sequence.

The Master, once it has received the data strings from the Slaves, compares their number of revolutions with its own and, if necessary, corrects the Slave which is out of step. This may occur for example in the following manner ("->" indicates data transmission, see also Fig. 4).

Master -> Slave No. 1 (string S01); Slave No. 1 -> Master (string S02); Master -> Slave No. 2 (string S01); Slave No. 2 -> Master (string S03); etc.

The communication is based on a procedure established by the program contained in the microprocessor and the Master encodes inside the string SO1 the instructions for the Slaves. Advantageously, the data structure of the synchronization strings SO1, SO2, SO3 is identical to that of the identification and initialization stings S1, S2, S3.

The Master classifies and evaluates the deviation in the movement of the Slaves and in its movement by means of different increasing deviation thresholds. Depending on the threshold exceeded by the deviation, the Master sends to the Slaves a command to slow down, setting a slower reference speed which is correspondingly lower the greater the deviation (with a greater deceleration rate). Basically the faster actuator is made to slow down. If the faster actuator is the actual Master, it is realigned without any commands being sent. This means that the Master has a speed and revolutions profile which all the Slaves (and the Master itself) must follow.

In the case of deviations beyond the maximum threshold (for example owing to an overload), the Master orders all the Slaves to stop, itself also stopping. In the event of stoppage of the actuators in a non-aligned position, the Master causes slowing down of the actuators so that they are aligned with the one left behind (obviously in relation to the preceding direction of movement).

In the case where the closing system encounters an obstacle, the actuator concerned is stopped and transmits a "motor stop" data string. The other actuators which are in listening mode on the transmission channel are stopped immediately. At this point the Master supplies the reference value (reference position) and orders the realignment of the actuators concerned.

The realignment is possible owing to the transmission by each actuator, to the Master, of the data indicating the travel of the chain 60. Therefore the Master has available, in addition to its own information, that relating to the movement of the Slaves and is able to calculate which of them is furthest behind.

It is obvious that with the invention there is no transmission priority among the actuators, but a sequence which is determined by the Master's program (which is the same as that of the Slave) at predefined time intervals for all the actuators connected in series (for example 10 ms).

Advantageously, as the end-of-travel position of the closing system is approached, the actuators are left free from the synchronization so as to allow perfect and safe closing of the leaf; namely after a certain amount of travel, the Master no longer controls the actuators, but only controls them for a few millimetres in the vicinity of the end-of-travel position of the closing system.

As seen, the Slaves are able to respond to the Master only when interrogated, namely following a communication sent to the individual Slave. The Master, when interrogating the Slave, sends its own information and the control data which it has processed relating to the preceding communication. The Slave responds and sends the data necessary for control during the subsequent communication. An interrogation procedure of this type is known as "polling".

It is, however, possible not to use a transmission sequence with static timing, so that the Master interrogates the Slave which it considers to be behind bypassing the other Slaves. In this way dangerous communication delays present in the known art are avoided.

An advantageous variant of the invention envisages auto-programming of the actuators which operate in synchronism. Once at least two actuators are connected together as described above, they establish data communication on the line L, recognizing each other. By means of, for example, a factory-set serial number (which the user does not need to know) with a progressively increasing value which results in a different initial time for appropriation of the transmission channel, etc., one of the actuators assumes the Master state and all the others become Slaves. After establishing the roles inside the system, the configuration is saved and therefore the system functions as described above. Following successive activation operations, the Master checks for consistency of the actuator network and, in the event of variation, repeats the initialization procedure.

Another variant envisages the coexistence in the network L of several Masters which control a subassembly of Slave actuators and exchange between them data so as to maintain correct synchronism and control of the respective series of Slaves. In this case, a hierarchy as to parity or subordination levels may be established between the Masters, namely there is one Master which controls all the others, this being useful when the number of actuators to be controlled is very high.

Yet another variant of the invention envisages that the communication between the Master and Slave actuators is performed on an external wireless channel L, for example a radio or infrared channel. In this case it is advantageous to use remote transmission means not only for programming remotely, but also for transferring data between the actuators. The advantage, in this case, of being able to eliminate the wiring associated with a cable communication channel is obvious.

These and other variants are included within the scope of protection of the following claims.

## Claims

1. Method for operating a closing system (22) such as doors, windows or the like with synchronized movement actuators, comprising the steps of:
- providing a plurality of actuators (50, 80) each having motor means (66, 74) for moving the closing system;
- connecting the actuators to the closing system;
- linking the actuators by means of a data communication channel (L) to which they have access via a send and receive interface (68) of their own and on which they exchange synchronization data (S01; S02; S03), identification data and initialization data (S1, S2, S3), said identification and initialization data being an alignment data string (S1) and response strings (S2, S3);
- providing each actuator with processing means (64) for individually managing data on the channel and driving the motor means;
- programming the operating condition of the actuator so as to cause it to assume either an operative configuration in which the actuator is the controller (50) and controls at least one of the other actuators (80) via the data channel or an operative configuration in which the actuator is controlled (80) by another controller actuator (50) via the data channel (L);
- following a user command to move the closing system, sending by the controller actuator (50) to the controlled actuators (80) a start command which is followed by activation of the associated motor means (66, 74) in the appropriate direction, followed by
- a step for checking synchronism between the actuators where the controller actuator (50) and the at least one controlled actuator (80) exchange a synchronism data string (S01; S02; S03) containing synchronism data in coded form, the synchronism string (S01; S02; S03) containing at least data relating to the number of revolutions performed by the motor means and/or a reference speed,
**characterized by** the fact of comprising a further step wherein the controller actuator (50) compares the synchronism data contained in the synchronism string (S01; S02; S03) of the at least one controlled actuator (80) with its own synchronism data and acts if necessary so as to correct the at least one controlled actuator (80) which is/are out of step by evaluating the deviation in the movement of the at least one controlled actuator (80) by means of different increasing deviation thresholds and, depending on the threshold exceeded, by sending to the at least one controlled actuator (80) a command to slow down setting a slower reference speed which is correspondingly lower the greater the deviation is, with a greater deceleration rate.

2. Method according to Claim 1, comprising the further step of programming the operating condition of the actuator (50, 80) so as to cause it to assume also an operative configuration where it operates in isolation.

3. Method according to Claims 1 or 2, comprising an initialization step where the actuator (50, 80) checks its own operating condition and a recognition step where, via the communication channel, the actuator (50, 80) checks the operative configuration of the other actuators, interrupting its operation if it detects operating conditions which are incongruent among them.

4. Method according to Claim 3, comprising a further step where, by mean of the channel, the controller actuator (50) adapts the state of the internal registers of the at least one controlled actuator (80) to its own state by means of the transmission of the data string (S1) for alignment between the controller actuator (50) and the at least one controlled actuator (80) and the at least one controlled actuator (80) sends to the controller actuator (50) a data response string (S2, S3) by means of which the latter checks that correct alignment has occurred.

5. Method according to Claim 4, in which the alignment data string (S1) and the response string (S2, S3) have the same data structure.

6. Method according to any of the preceding claims, in which the synchronization string (SO1, SO2, SO3) has the same structure as the alignment data string (S1) and the response string (S2, S3).

7. Method according to any of the preceding claims, in which the controller actuator (50) checks whether it is the fastest actuator among all of them and, if necessary, realigns itself, slowing down.

8. Method according to any of the preceding claims, in which in the case of deviations beyond a maximum threshold, the controller actuator (50) sends to the at least one controlled actuator (80) a stop command, itself stopping.

9. Method according to any of the preceding claims in which, in the case of deviations beyond a maximum threshold value, and in the case of the stoppage of the at least one actuator in a non-aligned position, the controller actuator (50) sends to the at least one controlled actuator (80) and to itself a slowing down command so as to align itself with the actuator which is furthest behind.

10. Method according to any one of the preceding claims, in which if an actuator (50, 80) detects an obstacle for the closing system, it stops and sends a particular "stop motor" data string, to which all the other actuators connected to the channel react stopping immediately and in which, after collective stopping of the actuators, the controller actuator (50) sends to the controlled actuator (80) a reference position and causes realignment of the actuators.

11. Method according to any one of the preceding claims, in which the controller actuator (50) exchanges data and/or commands with another controller actuator.

12. Method according to any one of the preceding claims, in which the actuators (50, 80) exchange between them data and/or commands with fixed timing sequence.

13. Method according to any one of the preceding claims, in which the actuators (50, 80) exchange between them data and/or commands via a wired external channel and/or via a wireless transmission channel.

14. Method according to any one of the preceding claims, in which the operating condition of the actuators (50, 80) is programmed remotely.

15. Method according to Claim 14, in which remote programming is performed by means of wireless transceiver means.

16. Actuators (50, 80) for implementing the method according to the preceding claims, comprising:
- motor means (66, 74) adapted for moving the closing system (22);
- a send and receive interface (68) adapted for connection to an external data communication channel (L) by means of which data may be exchanged with one or more actuators;
- processing means (64) adapted for managing data communication on the channel (L) and driving of the motor means (66, 74);
- means adapted for programming the operating condition of the actuator, able to cause it to assume either an operative configuration in which the actuator controls at least one other actuator connected to the data channel or an operative configuration in which the actuator is controlled (80) by another controller actuator (50) connected to the channel;
- the processing means (64) of the controller actuator (50) being adapted to:
following a user command to move the closing system, send to the controlled actuators (80) a start command which is followed by activation of the associated motor means (66, 74) in the appropriate direction,
check synchronism between the actuators by exchanging a synchronism data string (S01, S02, S03) with the at least one controlled actuator containing synchronism data in coded form, the synchronism string (S01, S02, S03) containing at least data relating to the number of revolutions performed by the motor means and/or a reference speed,
**characterized in that** the processing means (64) of the controller actuator (50) are adapted to:
compare the synchronism data contained in the synchronism string (S02; S03) of the at least one controlled actuator (80) with its own synchronism data and acts if necessary so as to correct the at least one controlled actuator (80) which is out of step by evaluating the deviation in the movement of the at least one controlled actuator (80) by means of different increasing deviation thresholds and, depending on the threshold exceeded, the controller actuator sends to the at least one controlled actuator (80) a command to slow down, setting a slower reference speed which is correspondingly lower the greater the deviation is, with a greater deceleration rate.

17. Actuators (50, 80) according to Claim 16, wherein the processing means are adapted to check the operating condition of the actuator and to recognize, via the communication channel, operative configuration of the other actuators, interrupting its operation if it detects operating conditions which are incongruent among them.

18. Actuators according to Claims 16 or 17, wherein the processing means of the controller actuator are adapted to adapt the state of the internal registers of the at least one controlled actuator (80) to its own state by means of the transmission of a data string (S1, S2; S3) for alignment between the controller actuator (50) and the at least one controlled actuator (80) while the processing means of the at least one controlled actuator (80) are adapted to send a data response string (S2, S3) by means of which the correct alignment is checked.

19. Actuators (50, 80) according to Claim 18, in which the synchronization string (SO1, SO2, SO3) has the same structure as the alignment data string (S1) and the response string (S2, S3).

20. Actuators according to one of Claims 16 to 19, in which in the case of deviations beyond a maximum threshold the controller actuator (50) is adapted to send to the at least one controlled actuator (80) a stop command, itself stopping.

21. Actuators according to one of Claims 16 to 20, in which in the case of deviations beyond a maximum threshold and in the case of the stoppage of the at least one actuator in a non-aligned position, the controller actuator (50) is adapted to send to the at least one controlled actuator (80) and to itself a slowing down command so as to align itself with the actuator which is furthest behind.

22. Actuators (50, 80) according to one of Claims 16 to 21, in which an actuator is adapted to stop and send a particular "stop motor" data string if an obstacle for the closing system is detected, to such "stop motor" data string all the other actuators connected to the channel are adapted to react stopping immediately and, after collective stopping of the actuators, the processing means of the controller actuator (50) is adapted to send to the controlled actuator (80) a reference position and causes realignment of the actuators.

23. Actuators (50, 80) according to one of Claims 16 to 22, in which the programming means comprise a selection device (70) for selecting the operating condition of the actuator.

24. Actuators (50, 80) according to any one of Claims 16 to 23, in which the transmission interface (68) comprises wireless transceiver means for forming a wireless communication channel with another actuator.

25. Actuators (50, 80) according to any one of claims 16 to 24 comprising also a power supply circuit (72) connected externally to power supply and control conductors.

26. Actuators (50, 80) according to Claim 25, in which the power supply and control conductors are two in number and are connected to a continuous supply voltage.

27. Actuators (50, 80) according to Claim 25, in which the power supply and control conductors are three in number (73a, 73b, 73c) at least one of which is connected to the public power supply network.

28. Actuators (50, 80) according to any one of Claims 16 to 27, comprising wireless transceiver means able to inform remotely the programming means of the operating condition of the actuator (50, 80).

29. Actuators (50, 80) according to any one of Claims 16 to 28, in which the programming means are able to cause the actuator to assume also an operative configuration where it operates individually.

## Patentansprüche

1. Verfahren zum Betrieb eines Schließsystems (22), wie Türen, Fenster oder Ähnliches, mit synchronisierten Bewegungsantriebsgliedern, das die Schritte aufweist:
- zur Verfügung stellen von einer Vielzahl von Antriebsgliedern (50, 80), wobei jedes ein Motormittel (66, 74) zum Bewegen des Schließsystems besitzt;
- Verbinden der Antriebsglieder mit dem Schließsystem;
- Verknüpfen der Antriebsglieder mittels eines Datenkommunikationskanals (L), auf den sie selbst über eine Sende- und Empfangsschnittstelle (68) Zugriff haben und in dem sie Synchronisierungsdaten (S01; S02; S03), Identifizierungsdaten und Initialisierungsdaten (S1, S2, S3) austauschen, wobei die Identifizierungs- und Initialisierungsdaten ein Ausrichtungsdatenstring (S1) und Antwortstrings (S2, S3) sind;
- Versehen jedes Antriebsglieds mit einem Bearbeitungsmittel (64), um die Daten in dem Kanal individuell zu verwalten und das Motormittel anzutreiben;
- Programmieren des Betriebszustands des Antriebsglieds, um zu bewirken, dass dieses entweder eine Betriebskonfiguration annimmt, in der das Antriebsglied das Steuergerät (50) ist und wenigstens eines der anderen Antriebsglieder (80) über den Datenkanal steuert, oder eine Betriebskonfiguration, in der das Antriebsglied (80) von einem anderen Steuerantriebsglied (50) über den Datenkanal (L) gesteuert wird;
- einem Benut zerbefehl zum Bewegen des Schließsystems folgend Senden eines Startbefehls von dem Steuerantriebsglied (50) an die eine gesteuerten Antriebsglieder (80),
das von einer Aktivierung des beteiligten Motormittels (66, 74) in der geeigneten Richtung gefolgt wird, gefolgt von
- einem Schritt zum Überprüfen der Synchronität zwischen den Antriebsgliedern, in dem das Steuerantriebsglied (50) und das zumindest eine gesteuerte Antriebsglied (80) einen Synchronisierungsdatenstring (S01, S02, S03) austauschen, der Synchronisierungsdaten in verschlüsselter Form enthält, wobei der Synchronisierungsstring (S01, S02, S03) zumindest Daten enthält, die sich auf die Anzahl der Umdrehungen, die das Motormittel durchgeführt hat und/oder eine Referenzgeschwindigkeit bezieht;
**gekennzeichnet durch** die Tatsache, dass ein weiterer Schritt aufgewiesen wird, in dem das Steuerantriebsglied (50) die Synchronisierungsdaten, die in dem Synchronisierungsstring (S02, S03) des zumindest einen gesteuerten Antriebsglieds (80) enthalten sind, mit seinen eigenen Synchronisierungsdaten vergleicht und, falls nötig, so agiert, dass das zumindest eine gesteuerte Antriebsglied (80), das/die aus dem Takt ist/sind, korrigiert wird, **durch** Auswerten der Abweichung in der Bewegung des zumindest einen gesteuerten Antriebsglieds (80), mit Mitteln verschiedener aufsteigender Abweichungsschwellenwerte, und **durch** Senden eines Befehls zum Abbremsen an das zumindest eine gesteuerte Antriebsglied (80), **durch** Einstellen einer langsameren Referenzgeschwindigkeit, die, mit einer größeren Verzögerungsrate, entsprechend geringer ist, je größer die Abweichung ist, abhängig von dem überschrittenen Schwellenwert.

2. Verfahren gemäß Anspruch 1, das den weiteren Schritt aufweist, den Betriebszustand des Antriebsglieds (50, 80) so zu programmieren, dass erreicht wird, dass dieses eine Betriebskonfiguration annimmt, in der es unabhängig funktioniert.

3. Verfahren gemäß Anspruch 1 oder 2, das einen Initialisierungsschritt aufweist, in dem das Antriebsglied (50, 80) seinen eigenen Betriebszustand überprüft, und einen Erkennungsschritt, in dem das Antriebsglied (50, 80) über den Kommunikationskanal die Betriebskonfiguration der anderen Antriebsglieder überprüft, und seinen Betrieb unterbricht, wenn es unter diesen Betriebszustände erfasst, die inkongruent sind.

4. Verfahren gemäß Anspruch 3, das einen weiteren Schritt aufweist, in dem das Steuerantriebsglied (50) mittels des Kanals den Zustand der internen Register des zumindest einen gesteuerten Antriebsglieds (80) mittels der Übermittlung des Datenstrings (S1) an seinen eigenen Zustand anpasst, zum Ausrichten von dem Steuerantriebsglied (50) und dem zumindest einen gesteuerten Antriebsglied (80), wobei das zumindest eine gesteuerte Antriebsglied (80) einen Datenantwortstring (S2, S3) an das Steuerantriebsglied (50) sendet, anhand dessen Letzteres überprüft, ob eine korrekte Ausrichtung erreicht wurde.

5. Verfahren gemäß Anspruch 4, in dem der Ausrichtungsdatenstring (S1) und der Antwortstring (S2, S3) dieselbe Datenstruktur haben.

6. Verfahren gemäß einem der vorhergehenden Ansprüche, in dem der Synchronisierungsstring (S01, S02, S03) dieselbe Struktur hat, wie der Ausrichtungsdatenstring (S1) und der Antwortstring (S2, S3).

7. Verfahren gemäß einem der vorhergehenden Ansprüche, in dem das Steuerantriebsglied (50) überprüft, ob es das schnellste Antriebsglied von allen ist, und, falls nötig, sich selbst durch Abbremsen neu ausrichtet.

8. Verfahren gemäß einem der vorhergehenden Ansprüche, in dem, für den Fall von Abweichungen über einen maximalen Schwellenwert, das Steuerantriebsglied (50) einen Stopp-Befehl an das zumindest eine gesteuerte Antriebsglied (80) sendet, und selbst stoppt.

9. Verfahren gemäß einem der vorhergehenden Ansprüche, in dem, für den Fall von Abweichungen über einen maximalen Schwellenwert, und für den Fall des Stoppens von dem zumindest einen Antriebsglied in einer nicht ausgerichteten Position, das Steuerantriebsglied (50) einen Abbremsbefehl an das zumindest eine gesteuerte Antriebsglied (80) und an sich selbst sendet, um sich selbst mit dem Antriebsglied, das am weitesten zurück liegt, auszurichten.

10. Verfahren gemäß einem der vorhergehenden Ansprüche, in dem, falls ein Antriebsglied (50, 80) ein Hindernis für das Schließsystem erfaßt, dieses stoppt und einen speziellen "Motorstopp" Datenstring sendet, auf den alle anderen Antriebsglieder, die mit dem Kanal verbunden sind, reagieren und sofort stoppen, und in dem das Steuerantriebsglied (50) an das gesteuerte Antriebsglied (80) eine Referenzposition sendet und nach dem kollektiven Stoppen der Antriebsglieder eine Wiederausrichtung der Antriebsglieder verursacht.

11. Verfahren gemäß einem der vorhergehenden Ansprüche, in dem das Steuerantriebsglied (50) Daten und/oder Befehle mit einem anderen Steuerantriebsglied austauscht.

12. Verfahren gemäß einem der vorhergehenden Ansprüche, in dem die Antriebsglieder (50, 80) miteinander Daten und/oder Befehle mit fester Zeitsequenz austauschen.

13. Verfahren gemäß einem der vorhergehenden Ansprüche, in dem die Antriebsglieder (50, 80) miteinander Daten und/oder Befehle über einen externen Kabelkanal und/oder über einen kabellosen Übertragungskanal austauschen.

14. Verfahren gemäß einem der vorhergehenden Ansprüche, in dem der Betriebszustand der Antriebsglieder (50, 80) ferngesteuert programmiert wird.

15. Verfahren gemäß Anspruch 14, in dem das ferngesteuerte Programmieren mittels eines kabellosen Sendeempfängermittels durchgeführt wird.

16. Antriebsglieder (50, 80) zum Implementieren des Verfahrens gemäß den vorhergehenden Ansprüchen, wobei jedes Antriebsglied aufweist:
- ein Motormittel (66, 74), das daran angepasst ist, das Schließsystem (22) zu bewegen;
- eine Sende- und Empfangsschnittstelle (68), die an die Verbindung zu einem externen Datenkommunikationskanal (L) angepasst ist, mittels dem Daten mit einem oder mehreren Antriebsgliedern ausgetauscht werden können;
- ein Bearbeitungsmittel (64), das daran angepasst ist, Datenkommunikation in dem Kanal (L) zu verwalten und das Motormittel (66, 74) anzutreiben;
- ein Mittel, das daran angepasst ist, den Betriebszustand des Antriebsglieds zu programmieren, das in der Lage ist, dieses dazu zu bringen, entweder eine Betriebskonfiguration anzunehmen, in der das Antriebsglied mindestens ein anderes Antriebsglied steuert, das mit dem Datenkanal verbunden ist, oder eine Betriebskonfiguration, in der das Antriebsglied (80) von einem anderen Steuerantriebsglied (50) gesteuert wird, das mit dem Kanal verbunden ist;
wobei das Bearbeitungsmittel (64) des Steuerantriebsglieds (50) daran angepasst ist:
einem Benutzerbefehl zum Bewegen des Schließsystems folgend,
einen Startbefehl an die gesteuerten Antriebsglieder (80) zu senden, was von der Aktivierung des entsprechenden Motormittels (66, 74) in der geeigneten Richtung gefolgt wird,
durch Austauschen eines Synchronisierungsdatenstrings (SO1, SO2, S03) die Synchronität zwischen den Antriebsgliedern zu überprüfen, wobei das zumindest eine gesteuerte Antriebsglied Synchronisierungsdaten in verschlüsselter Form aufweist, und der Synchronisierungsstring (SO1, SO2, SO3) zumindest Daten aufweist, die sich auf die Anzahl der Umdrehungen, die das Motormittel durchgeführt hat, und/oder eine Referenzgeschwindigkeit beziehen;
**dadurch gekennzeichnet, dass** das Bearbeitungsmittel (64) des Steuerantriebsglieds (50) daran angepasst ist:
die Synchronisierungsdaten, die in dem Synchronisierungsstring (SO2, SO3) des zumindest einen gesteuerten Antriebsglieds (80) enthalten sind, mit seinen eigenen Synchronisierungsdaten zu vergleichen, und, falls nötig, so zu agieren, dass das zumindest eine gesteuerte Antriebsglied (80), das außer Takt ist, korrigiert wird, durch Auswerten der Abweichung in der Bewegung des zumindest einen gesteuerten Antriebsglieds (80), mittels verschiedener ansteigender Abweichungsschwellenwerte, und, dass, abhängig von dem überschrittenen Schwellenwert, das Steuerantriebsglied einen Befehl zum Abbremsen an das zumindest eine gesteuerte Antriebsglied sendet, durch Einstellen einer langsameren Referenzgeschwindigkeit, die, mit einer größeren Verzögerungsrate, entsprechend geringer ist, je größer die Abweichung ist.

17. Antriebsglieder (50, 80) gemäß Anspruch 16, wobei das Bearbeitungsmittel daran angepasst ist, den Betriebszustand des Antriebsglieds zu überprüfen und über den Kommunikationskanal die Betriebskonfiguration der anderen Antriebsglieder festzustellen, und seinen Betrieb zu unterbrechen, falls es unter diesen Betriebszustände erfasst, die inkongruent sind.

18. Antriebsglieder gemäß Anspruch 16 oder 17, wobei das Bearbeitungsmittel des Steuerantriebsglieds daran angepasst ist, den Zustand der internen Register von dem zumindest einen gesteuerten Antriebsglied (80) mittels der Übertragung eines Datenstrings (S1, S2, S3) an seinen eigenen Zustand anzupassen, zur Ausrichtung des Steuerantriebsglieds (50) und des zumindest einen gesteuerten Antriebsglieds (80), während das Bearbeitungsmittel des zumindest einen gesteuerten Antriebsglieds (80) daran angepasst ist, einen Datenantwortstring (S2, S3), mittels dem die korrekte Ausrichtung überprüft wird, zu senden.

19. Antriebsglieder (50, 80) gemäß Anspruch 18, in denen der Synchronisierungsstring (SO1, SO2, SO3) dieselbe Struktur wie der Ausrichtungsdatenstring (S1) und der Antwortstring (S2, S3) hat.

20. Antriebsglieder gemäß einem der Ansprüche 16 bis 19, in denen für den Fall von Abweichungen über einen maximalen Schwellenwert, das Steuerantriebsglied (50) daran angepasst ist, einen Stopp-Befehl an das zumindest eine gesteuerte Antriebsglied (80) zu senden, und selbst zu stoppen.

21. Antriebsglieder gemäß einem der Ansprüche 16 bis 20, in denen, für den Fall von Abweichungen über einen maximalen Schwellenwert und in dem Fall des Stoppens von dem zumindest einen Antriebsglied in einer nicht ausgerichteten Position, das Steuerantriebsglied (50) daran angepasst ist, einen Abbremsbefehl an das zumindest eine gesteuerte Antriebsglied (80) und an sich selbst zu senden, um sich mit dem Antriebsglied auszurichten, das am weitesten zurück liegt.

22. Antriebsglieder (50, 80) gemäß einem der Ansprüche 16 bis 21, in denen ein Antriebsglied daran angepasst ist, zu stoppen und einen speziellen "Motorstopp" Datenstring zu senden, falls ein Hindernis für das Schließsystem erfaßt wird, wobei alle anderen Antriebsglieder, die mit dem Kanal verbunden sind, daran angepasst sind, auf solch einen "Motorstopp" Datenstring zu reagieren und sofort stoppen, und das Bearbeitungsmittel des Steuerantriebsglieds (50) daran angepasst ist, eine Referenzposition an die gesteuerten Antriebsglieder (80) zu senden und nach einem kollektiven Stoppen der Antriebsglieder eine Wiederausrichtung der Antriebsglieder zu verursachen.

23. Antriebsglieder (50, 80) gemäß einem der Ansprüche 16 bis 22, in denen das Programmiermittel eine Auswahlvorrichtung (70) aufweist, um den Betriebszustand des Antriebsglieds auszuwählen.

24. Antriebsglieder (50, 80) gemäß einem der Ansprüche 16 bis 23, in denen die Übertragungsschnittstelle (68) ein kabelloses Sendeempfängermittel aufweist, zum Ausbilden eines kabellosen Kommunikationskanals mit einem anderen Antriebsglied.

25. Antriebsglieder (50, 80) gemäß einem der Ansprüche 16 bis 24, die auch eine Stromversorgungsschaltung (72) enthalten, die extern mit einer Stromversorgung und Steuerleitungen verbunden ist.

26. Antriebsglieder (50, 80) gemäß Anspruch 25, in denen die Stromversorgung und die Steuerleitungen zwei Leitungen sind, und die mit einer Dauerversorgungsspannung verbunden sind.

27. Antriebsglieder (50, 80) gemäß Anspruch 25, in denen die Stromversorgung und die Steuerleitungen drei Leitungen (73a, 73b, 73c) sind, von denen zumindest eine mit dem öffentlichen Stromversorgungsnetz verbunden ist.

28. Antriebsglieder (50, 80) gemäß einem der Ansprüche 16 bis 27, die ein kabelloses Sendeempfängermittel aufweisen, das in der Lage ist, ferngesteuert das Programmiermittel über den Betriebszustand des Antriebsglieds (50, 80) zu informieren.

29. Antriebsglieder (50, 80) gemäß einem der Ansprüche 16 bis 28, in denen das Programmiermittel in der Lage ist, zu bewirken, dass das Antriebsglied auch eine Betriebskonfiguration annimmt, wo es individuell arbeitet.

## Revendications

1. Procédé pour actionner un système de fermeture (22) tel que des portes, des fenêtres ou similaire par des actionneurs à déplacements synchronisés, comprenant les étapes consistant à :
- prévoir une pluralité d'actionneurs (50, 80) comportant chacun des moyens formant moteur (66, 74) pour déplacer le système de fermeture;
- relier les actionneurs au système de fermeture ;
- relier les actionneurs au moyen d'un canal de communication de données (L) auquel ils ont accès par l'intermédiaire de leur propre interface d'envoi et de réception (68) et sur laquelle ils échangent des données de synchronisation (SO1; ; SO2 ; SO3), des données d'identification et des données d'initialisation (S1, S2, S3), lesdites données d'identification et d'initialisation étant une chaîne de données d'alignement (S1) et des chaînes de réponse (S2, S3) ;
- pourvoir chaque actionneur de moyens de traitement (64) pour gérer individuellement des données sur le canal et commander les moyens formant moteur ;
- programmer la condition de fonctionnement de l'actionneur de manière à l'amener à adopter soit une configuration de fonctionnement dans laquelle l'actionneur est le contrôleur (50) et commande au moins l'un des autres actionneurs (80) par l'intermédiaire du canal de données, soit une configuration de fonctionnement dans laquelle l'actionneur est commandé (80) par un autre actionneur-contrôleur (50) par l'intermédiaire du canal de données (L) ;
- à la suite d'une commande d'utilisateur de déplacement du système de fermeture, envoyer par l'actionneur-contrôleur (50) audits actionneurs commandés (80) une commande de démarrage qui est suivie d'une activation des moyens formant moteur (66, 74) associés dans la direction appropriée, suivi par
- une étape pour vérifier un synchronisme entre les actionneurs où l'actionneur-contrôleur (50) et ledit au moins un actionneur commandé (80) échangent une chaîne de données de synchronisme (SO1, SO2, SO3) contenant des données de synchronisme sous une forme codée, la chaîne de synchronisme (SO1, SO2, SO3) contenant au moins des données concernant le nombre de rotations effectuées par les moyens formant moteur et/ou une vitesse de référence;
**caractérisé par le fait qu'**il comprend une étape supplémentaire à laquelle l'actionneur-contrôleur (50) compare les données de synchronisme contenues dans la chaîne de synchronisme (SO2, SO3) dudit au moins un actionneur commandé (80) avec ses propres données de synchronisme et agit, si nécessaire, de manière à corriger ledit au moins un actionneur commandé (80) qui est hors de synchronisme en évaluant l'écart du déplacement dudit au moins un actionneur commandé (80) au moyen de différents seuils d'écart croissants et, en fonction du seuil dépassé, en envoyant audit au moins un actionneur commandé (80) une commande de ralentissement fixant une vitesse de référence plus faible, qui est d'autant plus faible que l'écart est grand, avec un taux de décélération plus grand.

2. Procédé selon la revendication 1, comprenant l'étape supplémentaire de programmation de la condition de fonctionnement de l'actionneur (50, 80) de manière à l'amener à adopter également une configuration de fonctionnement où il fonctionne de manière isolée.

3. Procédé selon la revendication 1 ou 2, comprenant une étape d'initialisation où l'actionneur (50, 80) vérifie sa propre condition de fonctionnement et une étape de reconnaissance où, par l'intermédiaire du canal de communication, l'actionneur (50, 80) vérifie la configuration de fonctionnement des autres actionneurs, interrompant son fonctionnement s'il détecte des conditions de fonctionnement qui ne sont pas en harmonie entre elles.

4. Procédé selon la revendication 3, comprenant une étape supplémentaire où, au moyen du canal, l'actionneur-contrôleur (50) adapte l'état des registres internes dudit au moins un actionneur commandé (80) à son propre état au moyen de la transmission de la chaîne de données (S1) pour un alignement entre l'actionneur-contrôleur (50) et ledit au moins un actionneur commandé (80) et ledit au moins un actionneur commandé (80) envoie à l'actionneur-contrôleur (50) une chaîne de réponse de données (S2, S3) au moyen de laquelle ce dernier vérifie qu'un alignement correct s'est produit.

5. Procédé selon la revendication 4, dans lequel la chaîne de données d'alignement (S1) et la chaîne de réponse (S2, S3) ont la même structure de données.

6. Procédé selon l'une quelconque des revendications précédentes, dans lequel la chaîne de synchronisation (SO1, SO2, SO3) a la même structure que la chaîne de données d'alignement (S1) et la chaîne de réponse (S2, S3).

7. Procédé selon l'une quelconque des revendications précédentes, dans lequel l'actionneur-contrôleur (50) vérifie s'il est l'actionneur le plus rapide parmi tous ceux-ci et, si nécessaire, se réaligne, en ralentissant.

8. Procédé selon l'une quelconque des revendications précédentes, dans lequel, dans le cas d'écarts au-delà d'un seuil maximum, l'actionneur-contrôleur (50) envoie audit au moins un actionneur commandé (80) une commande d'arrêt, s'arrêtant lui-même.

9. Procédé selon l'une quelconque des revendications précédentes, dans lequel, dans le cas d'écarts au-delà d'une valeur de seuil maximum, et dans le cas de l'arrêt dudit au moins un actionneur à une position non alignée, l'actionneur-contrôleur (50) envoie audit au moins un actionneur commandé (80) et à lui-même une commande de ralentissement de manière à s'aligner avec l'actionneur qui est le plus en arrière.

10. Procédé selon l'une quelconque des revendications précédentes, dans lequel, si un actionneur (50, 80) détecte un obstacle pour le système de fermeture, il s'arrête et envoie une chaîne de données « arrêt de moteur » particulière à laquelle tous les autres actionneurs connectés au canal réagissent en s'arrêtant immédiatement, et dans lequel, après un arrêt collectif des actionneurs, l'actionneur-contrôleur (50) envoie à l'actionneur commandé (80) une position de référence et provoque un réalignement des actionneurs.

11. Procédé selon l'une quelconque des revendications précédentes, dans lequel l'actionneur-contrôleur (50) échange des données et/ou des commandes avec un autre actionneur-contrôleur.

12. Procédé selon l'une quelconque des revendications précédentes, dans lequel les actionneurs (50, 80) échangent entre eux des données et/ou des commandes avec une séquence de synchronisation fixée.

13. Procédé selon l'une quelconque des revendications précédentes, dans lequel les actionneurs (50, 80) échangent entre eux des données et/ou des commandes par l'intermédiaire d'un canal e terne câ lé et/ ou par l'intermédiaire d'un canal de transmission sans fil.

14. Procédé selon l'une quelconque des revendications précédentes, dans lequel la condition de fonctionnement des actionneurs (50, 80) est programmée à distance.

15. Procédé selon la revendication 14, dans lequel la programmation à distance est effectuée au moyen de moyens d'émission-réception sans fil.

16. Actionneurs (50, 80) pour mettre en oeuvre le procédé selon les revendications précédentes, chaque actionneur comprenant :
- des moyens formant moteur (66, 74) adaptés pour déplacer le système de fermeture (22) ;
- une interface d'envoi et de réception (68) adaptée pour une conne ion à un canal de communication de données (L) e terne au moyen duquel des données peuvent être échangées avec un ou plusieurs actionneurs ;
- des moyens de traitement (64) adaptés pour gérer une communication de données sur le canal (L) et commander des moyens formant moteur (66, 74) ;
- des moyens adaptés pour programmer la condition de fonctionnement de l'actionneur, capa les de l'amener à adopter soit une configuration de fonctionnement dans laquelle l'actionneur commande au moins un autre actionneur connecté au canal de données, soit une configuration de fonctionnement dans laquelle l'actionneur est commandé (80) par un autre actionneur-contrôleur (50) connecté au canal ;
les moyens de traitement (64) de l'actionneur-contrôleur (50) étant adaptés pour :
à la suite d'une commande d'utilisateur de déplacement du système de fermeture, envoyer audits actionneurs commandés (80) une commande de démarrage qui est suivie d'une
activation des moyens formant moteur (66, 74) associés dans la direction appropriée,
vérifier le synchronisme entre les actionneurs en échangeant une chaîne de données de synchronisme (SO1, SO2, SO3) avec ledit au moins un actionneur commandé contenant des données de synchronisme sous une forme codée, la chaîne de synchronisme (SO1, SO2, SO3) contenant au moins des données concernant le nom re de rotations effectuées par les moyens formant moteur et/ou une vitesse de référence ;
**caractérisé en ce que** les moyens de traitement (64) de l'actionneur-contrôleur (50) sont adaptés pour :
comparer les données de synchronisme contenues dans la chaîne de synchronisme (SO2, SO3) dudit au moins un actionneur commandé (80) avec ses propres données de synchronisme et agir, si nécessaire, de manière à corriger ledit au moins un actionneur commandé (80) qui est hors de synchronisme en évaluant l'écart du déplacement dudit au moins un actionneur commandé (80) au moyen de différents seuils d'écart croissants et, en fonction du seuil dépassé, l'actionneur-contrôleur envoyant audit au moins un actionneur commandé une commande de ralentissement fi ant une vitesse de référence plus fai le, qui est d'autant plus fai le que l'écart est grand, avec un tau de décélération plus grand.

17. Actionneurs (50, 80) selon la revendication 16, dans lesquels les moyens de traitement sont adaptés pour vérifier la condition de fonctionnement de l'actionneur et pour reconnaître, par l'intermédiaire du canal de communication, une configuration de fonctionnement des autres actionneurs, interrompant son fonctionnement s'il détecte des conditions de fonctionnement qui ne sont pas en harmonie entre elles.

18. Actionneurs selon la revendication 16 ou 17, dans lesquels les moyens de traitement de l'actionneur-contrôleur sont adaptés pour adapter l'état des registres internes dudit au moins un actionneur commandé (80) à son propre état au moyen de la transmission d'une chaîne de données (S1, S2, S3) pour un alignement entre l'actionneur-contrôleur (50) et ledit au moins un actionneur commandé (80), tandis que les moyens de traitement dudit au moins un actionneur commandé (80) sont adaptés pour envoyer une chaîne de réponse de données (S2, S3) au moyen de laquelle l'alignement correct est vérifié.

19. Actionneurs (50, 80) selon la revendication 18, dans lesquels la chaîne de synchronisation (SO1, SO2, SO3) a la même structure que la chaîne de données d'alignement (S1) et la chaîne de réponse (S2, S3).

20. Actionneurs selon l'une des revendications 16 à 19, dans lesquels, dans le cas d'écarts au-delà d'un seuil ma imum, l'actionneur-contrôleur (50) est adapté pour envoyer audit au moins un actionneur commandé (80) une commande d'arrêt, s'arrêtant lui-même.

21. Actionneurs selon l'une des revendications 16 à 20, dans lesquels, dans le cas d'écarts au-delà d'un seuil ma imum et dans le cas de l'arrêt dudit au moins un actionneur à une position non alignée, l'actionneur-contrôleur (50) est adapté pour envoyer audit au moins un actionneur commandé (80) et à lui-même une commande de ralentissement de manière à s'aligner avec l'actionneur qui est le plus en arrière.

22. Actionneurs (50, 80) selon l'une des revendications 16 à 21, dans lesquels un actionneur est adapté pour s'arrêter et envoyer une chaîne de données « arrêt de moteur » particulière, si un o stacle pour le système de fermeture est détecté, lors de la réception de cette chaîne de données « arrêt de moteur », tous les autres actionneurs connectés au canal sont adaptés pour réagir en s'arrêtant immédiatement, et, après l'arrêt collectif des actionneurs, les moyens de traitement de l'actionneur-contrôleur (50) sont adaptés pour envoyer à l'actionneur commandé (80) une position de référence et pour provoquer un réalignement des actionneurs.

23. Actionneurs (50, 80) selon l'une des revendications 16 à 22, dans lesquels les moyens de programmation comprennent un dispositif de sélection (70) pour sélectionner la condition de fonctionnement de l'actionneur.

24. Actionneurs (50, 80) selon l'une quelconque des revendications 16 à 23, dans lesquels l'interface de transmission (68) comprend des moyens d'émission-réception sans fil pour former un canal de communication sans fil avec un autre actionneur.

25. Actionneurs (50, 80) selon l'une quelconque des revendications 16 à 24, comprenant également un circuit d'alimentation (72) connecté e térieurement à des conducteurs d'alimentation et de commande.

26. Actionneurs (50, 80) selon la revendication 25, dans lesquels les conducteurs d'alimentation et de commande sont au nom re de deu et sont connectés à une tension d'alimentation continue.

27. Actionneurs (50, 80) selon la revendication 25, dans lesquels les conducteurs d'alimentation et de commande sont au nom re de trois (73a, 73 , 73c), au moins l'un d'entre eu étant connecté au réseau d'alimentation pu lie.

28. Actionneurs (50, 80) selon l'une quelconque des revendications 16 à 27, comprenant des moyens d'émission-réception sans fil capa les d'informer à distance les moyens de programmation de la condition de fonctionnement de l'actionneur (50, 80).

29. Actionneurs (50, 80) selon l'une quelconque des revendications 16 à 28, dans lesquels les moyens de programmation sont capa les d'amener l'actionneur à adopter également une configuration de fonctionnement où il fonctionne individuellement.
